# EUROPEAN PATENT SPECIFICATION

(11) **EP 3 376 917 B1**
(45) Date of publication and mention of the grant of the patent: **05.06.2019**
(21) Application number: 16809173.4
(22) Date of filing: 15.11.2016
(51) Int. Cl.: A47J 31/60

(54) **CLEANING AND SANITIZING DEVICE FOR STEAM LANCES OF COFFEE MACHINES**
REINIGUNGS- UND DESINFEKTIONSVORRICHTUNG FÜR DAMPFLANZEN VON KAFFEEMASCHINEN
DISPOSITIF DE NETTOYAGE ET D'ASSAINISSEMENT POUR JETS DE VAPEUR DE MACHINES À CAFÉ

(30) Priority: 18.11.2015 IT UB20155711
(43) Date of publication of application: 26.09.2018
(73) Proprietor: Ambrodesign S.a.s. di Marco Ambrosini & C., 37137 Verona (IT)
(72) Inventor: AMBROSINI, Marco, 37137 Verona (IT)
(74) Representative: Sandri, Sandro
(86) International application number: PCT/IB2016/056853
(87) International publication number: WO 2017/085615

(56) References cited:
- WO-A1-2011/151871
- US-A- 4 800 805
- US-A1- 2006 272 516

## Description

### Technical field

The present invention relates to a cleaning and sanitizing device for steam lances of coffee machines, mainly, though not exclusively, of a type in professional use.

The present invention is a cleaning and sanitizing device which enables cleaning steaming lances present in coffee machines for professional and domestic use, said device comprising a water or steam treatment group which is dispensed starting from the higher part of the steam pipe in the direction of the lower part, at the steam dispensing head.

The cleaning and sanitizing device according to the invention obviates the problematic issues inherent to the maintaining in hygienically correct conditions of the steam lances, which are normally cleaned using means that is entirely inadequate.

The present invention is advantageously applied in the sector of accessories for coffee machines and in particular in the sector of steam lances.

### Prior Art

It is known that coffee machines, especially professional-level ones used in public businesses such as those used in bars and restaurants, but likewise also coffee machines for domestic use, are generally provided with a steam lance which enables heating liquids and foaming milk.

It is also known that milk and in particular the fats contained in the milk, with long use of the steam lance, tend to deposit and become layered on the steam lance.

In fact, during the foaming, the heat produced by the steam lance changes the milk, which forms encrustations especially on the external surface of the steam lance, being in direct contact with the heating surface of the steam lance and the milk jugs.

These encrustations deposit on the outlet spout of the steam lance and especially on the external surface thereof, becoming a prime target for the growth and development of bacteria.

Consequently operators, such as bar staff or other people using these coffee machines, are forced to carry out manual cleaning operations.

For a professional worker it is good practice to clean the steam lance after each use with a dedicated cloth, to rinse it before and after each milk foaming cycle and frequently rinse the milk jugs, but this is not sufficient to guarantee the efficiency and cleanliness thereof day after day.

To eliminate all the external and internal residues on the steam lance it would be necessary, and this is what bar staff or operators in the sector do today, to cyclically use a specific detergent which dissolves the encrustations, so as to remove the risk of bacterial development, and increase the quality of the steam dispensed, which is, as is well-known, very important for the creation of the micro-texturing of creamy milk.

As can be intuited, all these operations involve a considerable amount of time, inconvenient when one considers the frequency of intervention that is necessary, i.e. at each use, and even this does not guarantee perfect sanitizing, as the cloths and sponges used for cleaning in turn constitute a potentially damaging source for bacteriological proliferation in a hot-moist environment, with all the well-known negative consequences which compromise each treatment.

In turn the traditional cleaning of the steam lances, while insufficient as mentioned in the foregoing from the point of view of sanitizing, involves machine halts necessary for the cleaning operations, causing, overall, a drawback for the customers, which is reflected negatively on the commercial concern's income.

Document US 4800805 discloses an espresso machine with an attachment for the making of cappuccino wherein the attachment has a pipe with an open air admitting inlet at its upper end and an open air discharging outlet at its lower end. The steam conduit of the espresso machine has an orifice for steam at its lower end, and the outlet of the pipe is positioned in such a way that steam issuing from the orifice draws air into the pipe and out by way of the outlet to mix with steam and to froth a quantity of milk when the resulting mixture is admitted into a body of milk in a cup or another vessel.

Document US 2006/0272516 discloses a steam automatic dispensing device for preparing hot and frothed drinks, including a first duct for introducing steam inside a drink, a second duct for introducing air inside the drink, an electronic control unit for controlling the introduction of steam and/or air through said first and second duct, the control unit being programmable to carry out a predetermined control cycle depending on the desired drink to be obtained and on the drink temperature.

Document WO 2011/151871 discloses a coffe maker capable of increasing the temperature of foamed milk and heated milk and also capable of being cleaned bore easily. The coffee maker is provided with a milk foaming and heating container having a closed-end cylindrical tank for containing milk, a detachable lid for closing the upper opening of the tanl, and a vapor discharge pipe and an air discharge pipe which are detachably mounted to the bottom of the lid.

### Description of the invention

The present invention makes available a cleaning and sanitizing device for steam lances for coffee machines which enables automating the cleaning treatment by cleaning and sanitizing the steam lances, thus creating a condition able to eliminate or at least reduce the above-described drawbacks.

The invention in particular provides a sanitizing device for steam lances which is simple to construct, can possibly be integratable in existing machines, and especially is simple and rapid to use, so that the treatments can be carried out with rapidity while guaranteeing the requirement of efficiency in results, especially from the point of view of the cleaning and sanitizing.

The main aim of the invention is to guarantee high-level cleaning treatments by means of cleaning and sanitizing, as the use of jets of water and/or steam is included, directed from above the stem towards the dispensing head.

This is obtained by means of a cleaning and sanitizing device for steam lances of coffee machines, the characteristics of which are described in the main claim.

The dependent claims of the present solution delineate advantageous embodiments of the invention.

In the invention, along the final channelling of the steam lance, i.e. upstream of the head and the immersion sector of the lance in the liquid, a substantially cylindrical sleeve is installed, internally hollow and closed about the conduit in the upper part thereof, said cylindrical body being intercepted by a conduit carrying hot water and/or steam commanded by the mechanically- or electromechanically activated opening and closing device, or the like, suitable for the same aim.

### Description of the drawings

Other characteristics and advantages of the invention will be evident from reading the following description of an embodiment of the invention by way of non-limiting example with the aid of the figures illustrated in the appended tables of drawings, in which:
- figure 1 is a schematic view showing, in a section along a vertical median plane thereof, a steam lance provided with the cleaning and sanitizing means according to the invention;
- figure 2 is a schematic view showing a detail in cross section along a vertical median plane thereof, a steam lance provided with cleaning and sanitizing means in second embodiment thereof;
- figures 3 and 4 are schematic views showing the steam lance and the direction of the sanitizing jets respectively in the first and second embodiments.

### Description of an embodiment of the invention

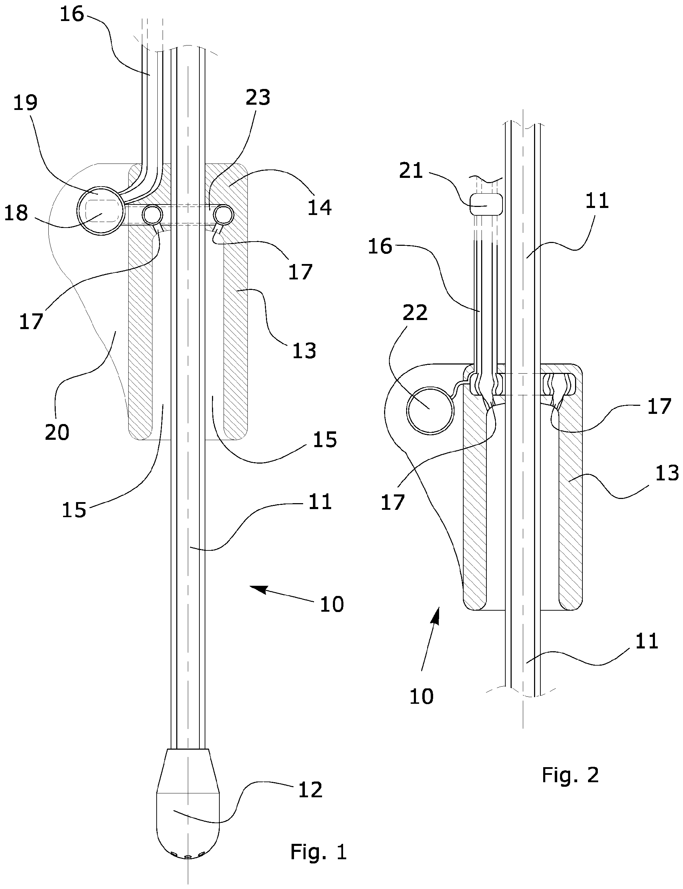

With reference to the appended figures, and firstly in particular figure 1, reference number 10 generally denotes a steam lance for heating liquids, for example water, or for foaming milk, or for other uses which are normally carried out by bar staff in combination with a coffee machine. The steam lance 10 is substantially constituted by a tubular conduit 11 superiorly engaged, by means of a joint, to the coffee machine and at a lower end of which the steam head 12 is arranged, from which the steam exits. The head 12 is suitable for being immersed in the liquid to be heated, such as water or milk, contained in a recipient.

The tubular conduit 11 of the steam lance 10 has at least a lower portion, a substantially rectilinear conformation, i.e. straight, and it is the lower portion of the lance that is immersed, together with the head 12, in the liquid to be heated or foamed, and which is therefore subject to the above-mentioned drawbacks.

According to the invention, a cleaning and sanitizing sleeve 13 is installed superiorly of the lower foaming portion of the tubular conduit 11, which comprises: an upper collar 14, which adheres to the circumference of the tubular conduit, inferiorly of which an annular cavity 15 is fashioned, open in a downwards direction, creating a conveying zone directed towards the lower part of the conduit in the direction of the head 12.

An auxiliary cleaning and sanitizing conduit 16 is inserted at the upper collar 14, which conduit 16 follows the tubular conduit 11 in the high part and which opens into the cavity 15 through one or more holes 17 for injection of hot water and/or steam fashioned in the collar and having a radial arrangement with respect to the centre of the axis.

The cleaning and sanitizing conduit 16 is supplied from a water tank or from the same boiler as the coffee machine, or by another, possibly autonomous, boiler, and the sanitizing conduit 16 is intercepted at the collar 14 by retaining means 18 commandable by a special command device of a mechanical type or an electromechanical type according to versions.

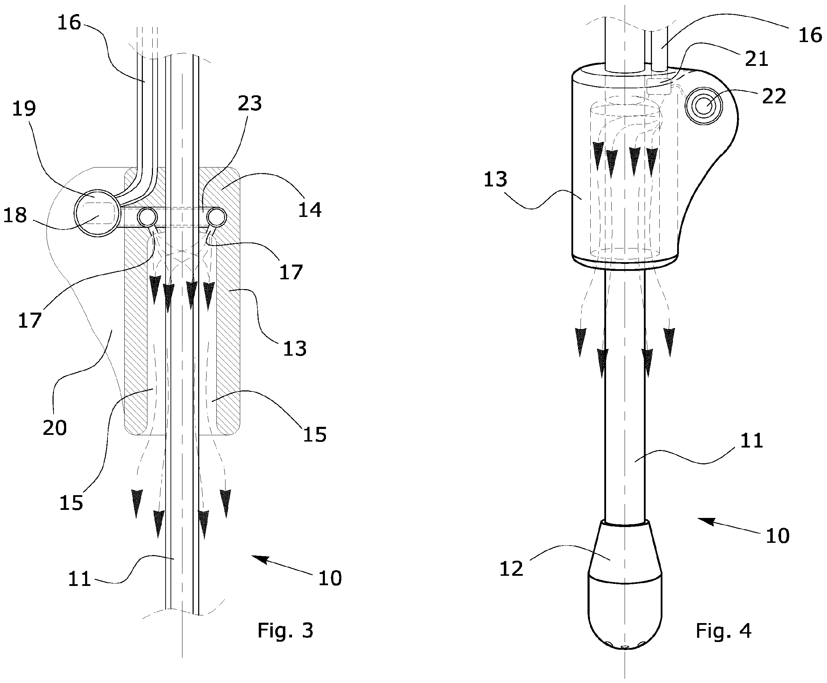

These mechanical or electromechanical command devices comprise:
a) in a first case, a valve of a manual type commanded by a manually-activated button 19 possibly located internally of a special grip 20, as is visible in figures 1 and 3,
b) in a second case, a solenoid valve 21 commanded by an electrical-pulse micro-switch 22, as is visible in figures 2 and 4.

In both cases the conduit 16 which opens internally of the cavity 15 inferiorly of the collar 14 is able on the operator's command to dispense jets of water and/or steam directed towards the outlet of the cavity, striking the lower part of the tubular conduit 11 up to the steam head 12 located on the lower end.

From the operating point of view, the dispensing of jets of hot water and/or steam imparted by manual pressure on the button 19 or on the micro-switch 22 produces the effect of dispensing, on the tubular conduit 11, the quantity of hot water and/or steam necessary for cleaning and complete sanitizing of the steam lance 10, which in this way will always be ready for use without having recourse to the traditional anti-hygienic manual treatments using cloths or sponges.

Further embodiments include a manifold 23, or another like distributor of an annular type facilitating the distribution of the water and/or steam and extending throughout the whole circumference of the chamber 15, is inserted at the mouth of the conduit 16 internally of the chamber 15, i.e. at the outlet of the hole/s 17, said manifold comprising a plurality of holes 17, which open towards the annular chamber 15.

## Claims

1. A cleaning and sanitizing device for a steam lance (10) of a coffee machine, said steam lance comprising a tubular conduit (11) whose upper part is connected to the coffee machine and having a steam head (12) at a lower end thereof, said device being **characterised in that** said steam lance is associated to a cleaning and sanitizing sleeve (13), comprising an upper collar (14), which adheres to a circumference of the tubular conduit, and having an annular cavity made in a lower part thereof (15), open in a downwards direction, able to create a conveying zone directed towards a lower part of the tubular conduit in direction of the steam head (12), and **in that** whereby a liquid and/or steam for cleaning and sanitizing coming from a conduit (16) is injected into said annular cavity (15) by means of a control device (18, 19, 21, 22) and is directable towards said steam head (12), striking the tubular conduit (11).

2. A device according to claim 1, **characterised in that** said conduit (16) is for auxiliary cleaning and sanitizing, whereby said conduit is inserted at the upper collar (14) of said cleaning and sanitizing sleeve (13), said conduit (16) following the tubular conduit (11) in a high part thereof and opening into the annular cavity (15) through one or more holes (17) made in the upper collar.

3. A device according to one of the preceding claims, **characterised in that** said conduit (16) is supplied by a tank of water or steam coming from a boiler supplying the coffee machine or from an auxiliary boiler.

4. A device according to one of the preceding claims,-**characterised in that** said conduit (16), at the upper collar (14), is provided with retaining means (18, 21) controlled by a control device of mechanical (18, 19) or electromechanical type (21, 22).

5. A device according to one of the preceding claims, **characterised in that** the control device of mechanical type comprises a valve of a manual type (18) controlled by a pushbutton (19), located inside of a grip (20).

6. A device according to claim 4, **characterised in that** the control device of electromechanical type comprises a solenoid valve (21) controlled by an electrical-pulse micro-switch (22).

7. A device according to one of the preceding claims, **characterised in that** a manifold (23), or another like distributor of an annular type facilitating the distribution of the water and/or steam and extending throughout the whole circumference of the annular cavity (15), is inserted at an inlet of the conduit (16) inside the annular cavity, (15), said manifold comprising a plurality of holes (17), which open towards the annular cavity (15).

## Patentansprüche

1. Reinigungs- und Desinfektionsvorrichtung für eine Dampflanze (10) einer Kaffeemaschine, wobei die Dampflanze eine rohrförmige Leitung (11) umfasst, deren oberer Teil mit der Kaffeemaschine verbunden ist und an ihrem unteren Ende einen Dampfkopf (12) aufweist, **dadurch gekennzeichnet, dass** die Dampflanze einer Reinigungs- und Desinfektionsmanschette (13) zugeordnet ist, die einen oberen Bund (14) umfasst, der an einem Umfang der rohrförmigen Leitung haftet, und einen ringförmigen Hohlraum aufweist, der in einem unteren Teil davon (15) ausgebildet ist, der in Abwärtsrichtung offen ist und in der Lage ist, eine Förderzone zu schaffen, die auf einen unteren Teil der Rohrleitung in Richtung des Dampfkopfes (12) gerichtet ist, und dass eine Flüssigkeit und/oder Dampf zum Reinigen und Desinfizieren, die/der aus einer Leitung (16) kommt, mittels einer Steuervorrichtung (18, 19, 21, 22) in den ringförmigen Hohlraum (15) eingespritzt wird und auf den Dampfkopf (12) gerichtet werden kann, der auf die rohrförmige Leitung (11) trifft.

2. Vorrichtung nach Anspruch 1, **dadurch gekennzeichnet, dass** die Leitung (16) zu unterstützender Reinigung und Desinfektion dient, wobei die Leitung am oberen Bund (14) der Reinigungs- und Desinfektionsmanschette (13) eingesetzt ist, wobei die Leitung (16) in einem oberen Abschnitt davon der rohrförmigen Leitung (11) folgt und sich in den ringförmigen Hohlraum (15) durch ein oder mehrere in dem oberen Bund ausgebildete Löcher (17) öffnet.

3. Vorrichtung nach einem der vorstehenden Ansprüche, **dadurch gekennzeichnet, dass** die Leitung (16) von einem Tank mit Wasser oder Dampf versorgt wird, das/der aus einem Kessel, der die Kaffeemaschine versorgt, oder von einem Hilfskessel kommt.

4. Vorrichtung nach einem der vorstehenden Ansprüche, **dadurch gekennzeichnet, dass** die Leitung (16) am oberen Bund (14) mit Haltemitteln (18, 21) versehen ist, die von einer Steuervorrichtung vom mechanischen (18, 19) oder elektromechanischen Typ (21, 22) gesteuert werden.

5. Vorrichtung nach einem der vorstehenden Ansprüche, **dadurch gekennzeichnet, dass** die Steuervorrichtung vom mechanischen Typ ein Ventil vom manuellen Typ (18) umfasst, das durch einen Druckknopf (19) gesteuert wird, der sich in einem Griff (20) befindet.

6. Vorrichtung nach Anspruch 4, **dadurch gekennzeichnet, dass** die Steuervorrichtung vom elektromechanischen Typ ein Magnetventil (21) umfasst, das durch einen elektrischen Impulsmikroschalter (22) gesteuert wird.

7. Vorrichtung nach einem der vorstehenden Ansprüche, **dadurch gekennzeichnet, dass** ein Verteilelement (23) oder ein ähnlicher Verteiler eines ringförmigen Typs, der die Verteilung des Wassers und/oder des Dampfes ermöglicht und sich über den gesamten Umfang des ringförmigen Hohlraums (15) erstreckt, an einem Einlass der Leitung (16) innerhalb des ringförmigen Hohlraums (15) eingesetzt ist, wobei das Verteilelement eine Vielzahl von Löchern (17) umfasst, die sich zum ringförmigen Hohlraum (15) hin öffnen.

## Revendications

1. Dispositif de nettoyage et d'assainissement, destiné à une buse à vapeur (10) d'une machine à café, ladite buse à vapeur comprenant un conduit tubulaire (11), dont la partie supérieure est raccordée à la machine à café, et comportant une tête de vapeur (12) à une extrémité inférieure de celle-ci, ledit dispositif étant **caractérisé en ce que** ladite buse à vapeur est associée à un manchon de nettoyage et d'assainissement (13) comprenant un collet supérieur (14), qui adhère à une circonférence du conduit tubulaire, et comportant une cavité annulaire réalisée dans une partie inférieure (15) de celui-ci, ouverte vers le bas, apte à créer une zone de transport dirigée vers une partie inférieure du conduit tubulaire en direction de la tête à vapeur (12), et **en ce qu'**un liquide, et/ou de la vapeur, destiné au nettoyage et à l'assainissement, provenant d'un conduit (16), est injecté dans ladite cavité annulaire (15) au moyen d'un dispositif de commande (18, 19, 21, 22) et peut être dirigé vers ladite tête à vapeur (12), en heurtant le conduit tubulaire (11).

2. Dispositif selon la revendication 1, **caractérisé en ce que** ledit conduit (16) est destiné au nettoyage et à l'assainissement auxiliaires, ledit conduit étant inséré au niveau du collet supérieur (14) dudit manchon de nettoyage et d'assainissement (13), ledit conduit (16) suivant le conduit tubulaire (11) dans une partie haute de celui-ci et débouchant dans la cavité annulaire (15) par au moins un trou (17) réalisé dans le collet supérieur.

3. Dispositif selon l'une des revendications précédentes, **caractérisé en ce que** ledit conduit (16) est alimenté par un réservoir d'eau ou de vapeur provenant d'une chaudière alimentant la machine à café ou d'une chaudière auxiliaire.

4. Dispositif selon l'une des revendications précédentes, **caractérisé en ce que** ledit conduit (16) est muni, au niveau du collet supérieur (14), de moyens de retenue (18, 21) commandés par un dispositif de commande de type mécanique (18, 19) ou électromécanique (21, 22).

5. Dispositif selon l'une des revendications précédentes, **caractérisé en ce que** le dispositif de commande de type mécanique comprend une vanne de type manuel (18) commandée par un bouton poussoir (19), situé à l'intérieur d'une poignée (20).

6. Dispositif selon la revendication 4, **caractérisé en ce que** le dispositif de commande de type électromécanique comprend une vanne à solénoïde (21) commandée par un micro-commutateur à impulsions électriques (22).

7. Dispositif selon l'une des revendications précédentes, **caractérisé en ce qu'**un collecteur (23), ou un autre distributeur analogue d'un type annulaire facilitant la distribution de l'eau et/ou de la vapeur et s'étendant sur toute la circonférence de la cavité annulaire (15), est inséré au niveau d'une entrée du conduit (16) à l'intérieur de la cavité annulaire (15), ledit collecteur comprenant une pluralité de trous (17) qui s'ouvrent en direction de la cavité annulaire (15).
